# EUROPÄISCHE PATENTSCHRIFT

(11) **EP 0 525 847 B1**
(45) Veröffentlichungstag und Bekanntmachung des Hinweises auf die Patenterteilung: **08.11.1995**
(21) Anmeldenummer: 92201860.1
(22) Anmeldetag: 24.06.1992
(51) Int. Cl.: B01D 53/54, C04B 7/60, B01J 27/053

(54) **Verfahren zur Entstickung der bei der Herstellung von Zement anfallenden Abgase**
Process for removing nitrogen oxides from exhaust gases resulting from the manufacturing of cement
Procédé d'élimination d'oxydes d'azote des gaz d'échappement provenant de la fabrication de ciment

(30) Priorität: 27.07.1991 DE 4125004
(43) Veröffentlichungstag der Anmeldung: 03.02.1993
(73) Patentinhaber: METALLGESELLSCHAFT Aktiengesellschaft, 60015 Frankfurt (DE)
(72) Erfinder: Weisweiler, Werner, Dr. Professor, W-7537 Remchingen-Singen (BR)

(56) Entgegenhaltungen:
- EP-A- 0 276 883
- EP-A- 0 325 811
- EP-A- 0 435 361
- FR-A- 2 318 835
- DATABASE WPI Section Ch, Week 7822, Derwent Publications Ltd., London, GB; Class E36, AN 78-39221A
- DATABASE WPI Section Ch, Week 7747, Derwent Publications Ltd., London, GB; Class E36, AN 77-83599Y

## Beschreibung

Die Erfindung bezieht sich auf ein Verfahren zur Entstickung der bei der Herstellung von Zement anfallenden Abgase, bei dem die mit Rohmehl beladenen Abgase bei 300 bis 450 °C mit NH₃ in Gegenwart eines Katalysators zur Reaktion gebracht werden, wobei das NH₃ dem Abgas in einem Molverhältnis NH₃ : NO = 0,7 : 1 bis 1,5 : 1 zugegeben wird.

Zement ist ein anorganisches nichtmetallisches Pulver, das mit Wasser gemischt wird, nach dem Mischen selbständig erhärtet und nach dem Erhärten dauerhaft fest bleibt. Man unterscheidet zwischen den sog. Normzementen Portlandzement, Eisenportlandzement, Hochofenzement und Traßzement. Die in der Bundesrepublik Deutschland hergestellten Normzemente haben folgende chemische Zusammensetzung:
CaO 41 bis 67 Gew.%, SiO₂ 18 bis 33 Gew.%, Al₂O₃ 3 bis 14 Gew.%, Fe₂O₃ 0,5 bis 4,5 Gew.%, MnO 0 bis 0,6 Gew.%, MgO 0,5 bis 9 Gew.%, SO₃ 1 bis 4,5 Gew.%.

Die Herstellung des Zements umfaßt das Gewinnen und Aufbereiten der Rohstoffe, das Brennes des Rohstoffgemisches zu Zementklinker, das Herstellen der Zumahlstoffe sowie das gemeinsame Vermahlen des Klinkers und ggf. eines oder mehrerer Zumahlstoffe mit Calciumsulfat als Erstarrungsregler. Die Rohstoffe (Kalkstein und Ton) werden trocken aufgemahlen und liefern das Rohmehl. Das Rohmehl wird während des Mahlvorgangs durch ein heißes Gas getrocknet, danach aufgewärmt und anschließend zu Zementklinker gebrannt. Je nach Bauart des Brennofens wird das Rohmehl während ca. 1 bis 5 Stunden auf die Brenntemperatur von ca. 1450°C aufgewärmt und verbleibt etwa 10 bis 20 Minuten bei dieser Temperatur. Anschließend wird der Zementklinker möglichst schnell abgekühlt. Beim Erhitzen des Rohmehls, das noch eine Restfeuchte von 8 bis 12 Gew.% aufweisen kann , wird zunächst bis etwa 100°C das anhaftende Wasser und bis etwa 600°C das im Ton adsorptiv und chemisch gebundene Wasser entfernt. Die Zersetzung des Calciumkarbonats beginnt in Gegenwart von SiO₂, Al₂O₃ und Fe₂O₃ schon bei 550 bis 600°C und verläuft oberhalb 900°C sehr schnell. Das Brenngut verliert während des Brennens ca. 35 Gew.% seines Trockengewichts. In der Bundesrepublik Deutschland werden ca. 97 % des Zementklinkers in Drehrohröfen gebrannt, die unter 3 bis 4° geneigt sind. Infolge Neigung und Drehung des Ofens läuft das am oberen Ende aufgegebene vorgewärmte Rohmehl einer Kohlenstaub-, Öl- oder Gasflamme entgegen, die am unteren Ende des Ofens brennt. Im Bereich der Flamme mit Gastemperaturen von 1800 bis 2000°C werden Brennguttemperaturen von 1350 bis 1500°C erreicht, die für die Klinkerbildung erforderlich sind. Nach dem Brennen verläßt der Klinker den Drehrohrofen und fällt in einen Kühler, der mit Luft als Kühlmedium arbeitet und in dem der Klinker bis zu einer Temperatur von 800 bis 900°C gekühlt wird. Die zur Kühlung des Zementklinkers verwendete Luft wird dem Drehrohrofen als Verbrennungsluft zugeführt. Die Vorwärmung des Rohmehls erfolgt entweder im Drehrohrofen selbst oder aber in einem separaten Vorwärmer, der vorzugsweise als aus mehreren Zyklonen bestehende Apparatur gestaltet ist. Die heißen Abgase des Drehrohrofens durchströmen den Zyklonvorwärmer von unten nach oben, und das trockene Rohmehl wird den Abgasen vor der obersten Zyklonstufe zugegeben, in den einzelnen Zyklonen wieder aus dem Gas abgeschieden und vor der nächsten Zyklonstufe erneut im Gasstrom suspendiert. Das Rohmehl wird im Vorwärmer in der Regel auf eine Temperatur von ca. 800°C vorgewärmt, während das Abgas nach dem Verlassen der obersten Zyklonstufe noch Temperaturen von 300 bis 400°C aufweist. Im Zyklonvorwärmer kann bereits eine teilweise Calcinierung des Rohmehls erfolgen. Zum Herstellen von Zement wird der Zementklinker allein oder mit den Zumahlstoffen Hüttensand, Traß, Ölschiefer oder Flugasche gemahlen. Dem Mahlgut wird außerdem Gips zum Regeln des Erstarrens zugesetzt.

Im Drehrohrofen bilden sich bei den hohen Temperaturen der Brennflamme in erheblicher Menge Oxide des Stickstoffs, vorzugsweise NO, die aus den Abgasen entfernt werden müssen, da sie als Umweltgifte wirken.

Aus der JP-A-53-043670 ist ein Verfahren zur Entstickung von Abgasen aus Zementöfen bekannt, bei dem die Abgase mit einer Temperatur von 350 °C mit NH₃ oder einem anderen Reduktionsmittel in Gegenwart eines Katalysators behandelt werden, der in einem bewegten Bett angeordnet ist und die katalytisch wirksamen Elemente V, W, Fe, Co oder Mn enthält. Aus der EP-A-0 325 811 ist ein Verfahren zur katalytischen Reduktion von in einem Gas enthaltenen NO mit dem Reduktionsmittel NH₃ bekannt, bei dem das NO-haltige Gas mit NH₃ gemischt und die Mischung bei 185 bis 500 °C sowie bei Normaldruck an einem Katalysator zur Reaktion gebracht wird, der aus einem sauren Träger, bestehend aus SiO₂, Aluminiumsilikaten oder alpha-Al₂O₃ sowie den katalytisch aktiven Substanzen CoSO₄, MnSO₄, FeSO₄ und/oder Fe₂(SO₄)₃ zusammengesetzt ist, wobei die katalytisch aktiven Substanzen in einer Menge von 0,5 bis 20 Gew.% auf den Träger aufgebracht sind. Bei diesem Verfahren ist es besonders vorteilhaft, wenn die Mischung aus dem NO-haltigen Gas und dem NH₃ bei 290 bis 450 °C an einem Katalysator zur Reaktion gebracht wird, dessen Träger aus SiO₂ besteht und der 5 bis 15 Gew.% Mangansulfat und Eisensulfat enthält, wobei das Molverhältnis Mangansulfat : Eisensulfat, letzteres berechnet als FeSO₄, = 1 : 10 bis 10 : 1 beträgt. Die EP-A-0 276 883 offenbart ein Verfahren zur gleichzeitigen Entstickung und Entschwefelung eines sauerstoffhaltigen Abgases, bei dem das Abgas mit NH₃ gemischt und dann als Wirbelgas einer Wirbelschicht zugeführt wird, wobei das Wirbelbett aus einem Katalysator besteht, der die Reduktion des NO mit NH₃ zu N₂ sowie die Oxidation des SO₂ mit O₂ zu SO₃ bewirkt. Der Katalysator besteht aus einem Träger, den katalytisch aktiven Substanzen V₂O₅ sowie Fe₂O₃, FeSO₄, und/oder Fe₂(SO₄)₃ sowie Alkalisulfaten. Das durch Oxidation gebildete SO₃ kann in Form von Schwefelsäure gewonnen oder durch ein Entschwefelungsmittel gebunden werden, das aus Na₂CO₃, MgO, MgCO₃, CaO, CaCO₃ und/oder Ca(OH)₂ besteht. Diese bekannten Verfahren arbeiten alle mit einem Katalysator, der in einem bewegten Bett bzw. einem Wirbelbett angeordnet ist und der aus einem Träger besteht, auf den die katalytisch wirksamen Substanzen aufgebracht sind.

Schließlich beschreibt die EP-A-0 435 361 ein Verfahren zur Reduktion des NOx-Gehalts in den Abgasen von Zement-Brennöfen durch Zugabe von Ammoniak und/oder ammoniakhaltigen Stoffen in die heißen Abgase, die danach unter Wärmeabgabe an das Rohmehl gekühlt, in an sich bekannter Weise entstaubt und schließlich bei 50 bis 100 °C unter Verwendung einer Mischung aus Zement-Rohmehl und Kalkhydrat trocken oder halbtrocken entschwefelt werden, wobei das in der Entschwefelungsstufe aus dem Abgas trocken abgeschiedene Feststoffgemisch in den 850 bis 1000 °C heißen Abgasstrom zurückgeführt wird. Bei diesem Verfahren erfolgt die Zugabe von Ammoniak bzw. von ammoniakhaltigen Stoffen bei 850 bis 1000 °C in Abwesenheit eines Katalysators.

Der Erfindung liegt die Aufgabe zugrunde, ein Verfahren zur Entstickung der bei der Herstellung von Zement anfallenden Abgase zu schaffen, das eine sehr weitgehende Entfernung der Stickoxide auch in Gegenwart von Rohmehlstaub zuläßt, das keine Abfallprodukte liefert, das mit einfachen technischen Mitteln in den Zementherstellungsprozeß integriert werden kann und das betriebssicher sowie kostengünstig arbeitet. Unter dem Begriff "Entstickung" wird die Entfernung der in den Abgasen enthaltenen Stickoxide NO und NO₂ verstanden.

Die der Erfindung zugrunde liegende Aufgabe wird dadurch gelöst, daß als Katalysator kristallines Eisensulfat oder eine Mischung aus kristallinem Eisensulfat und kristallinem Mangansulfat verwendet wird, wobei der Katalysator eine Teilchengröße von 50 bis 500 µm hat, und im Abgasstrom vor dem obersten Zyklon des Vorwärmers verteilt wird.

NH₃ wird dem Abgas entweder gasförmig oder in wäßriger Lösung zugesetzt. Im Eisensulfat kann das Eisen sowohl in zweiwertiger als auch in dreiwertiger Form vorliegen. Mit dem Verfahren wird in vorteilhafter Weise erreicht, daß der Stickoxidgehalt der Abgase, der in der Praxis zwischen 1.000 und 10.000 mg/Nm³ - berechnet als NO - liegt, auf Werte zwischen 100 und 500 mg/Nm³ abgesenkt wird. Die katalytische Reduktion der Stickoxide wird durch die Gegenwart des Rohmehlstaubs nicht beeinträchtigt, so daß eine Entstaubung des Abgases vor der Entstickung nicht erforderlich ist. Die benötigte Menge an Eisensulfat bzw. Mangansulfat ist außerdem so gering, daß diese Stoffe im Zementrohmehl verbleiben können, ohne daß es zu Störungen der Zementqualität kommt, zumal eine bestimmte Menge Eisenoxid im Zementklinker vorhanden sein muß. Nach der Erfindung kann also die Entstickungsreaktion innerhalb des Vorwärmers erfolgen. Bei der erfindungsgemäßen Entstickung der Abgase werden die Stickoxide NO und NO₂ mit einer Ausbeute (Entstickungsgrad) von mehr als 90% aus dem Abgas durch Reduktion entfernt. Bei der Reduktionsreaktion entsteht neben Wasser als Hauptprodukt Stickstoff in einer Ausbeute von mehr als 99% und als Nebenprodukt N₂O in einer Ausbeute von weniger als 1%. Es ist zwar bekannt, daß die Reduktion der Oxide des Stickstoffs mit NH₃ bei 300 bis 500 °C durch Eisenverbindungen begünstigt wird; für den Fachmann war es aber überraschend, daß die katalytische Wirkung auch in Gegenwart des basisch wirkenden Zement-Rohmehls erhalten bleibt.

Die vergleichsweise geringe Katalysatormenge kann mit Zement-Rohmehl oder Kalziumsulfat mit dem Ziel dei besseren Dosierbarkeit verdünnt werden. Eine optimale Entstickung der Abgase - also eine nahezu quantitative Reduktion der Stickoxide bei Verwendung einer möglichst geringen Katalysatormenge und bei einer vernachlässigbaren Beeinflussung der Qualität des Zements durch den Katalysator - wird erfindungsgemäß erreicht, wenn der Katalysator dem Abgas in einer Menge von 1 bis 3 g/Nm³ zugegeben und im Zementklinker eingebunden wird. Bei dieser Arbeitsweise kann auch bei hohen Stickoxidgehalten im Abgas ein Entstickungsgrad von > 92% erreicht werden.

Nach der Erfindung ist vorgesehen, daß Eisensulfat und Mangansulfat (berechnet als FeSO₄ und MnSO₄) im Gewichtsverhältnis 3 : 1 bis 5 : 1 gemischt sind. Hierdurch wird die Leistungsfähigkeit des Katalysators innerhalb eines relativ großen Temperaturfensters auf einem sehr hohen Niveau gehalten, wobei es durch das im Abgas enthaltene Rohmehl nicht zu nachteiligen Einflüssen auf die Leistungsfähigkeit des Katalysators kommt.

Für den Fall, daß das Abgas bei 300 bis 450 °C noch freies SO₂ enthält, ist nach der Erfindung vorgesehen, daß dem Katalysator vor seiner Verteilung im Abgasstrom Ca(OH)₂ und/oder CaO zugemischt wird, wobei das Molverhältnis von freiem SO₂ zu dem als Ca(OH)₂ und/oder CaO zugemischten Ca 1 : 1,5 bis 1 : 5 beträgt. Hierdurch wird eine weitgehende Entschwefelung der Abgase erreicht, wobei es besonders vorteilhaft ist, daß der anwesende Katalysator das freie SO₂ zu SO₃ oxidiert, welches quantitativ zu CaSO₄ reagiert.

Der Gegenstand der Erfindung wird nachfolgend anhand der Zeichnung und eines Ausführungsbeispiels näher erläutert.

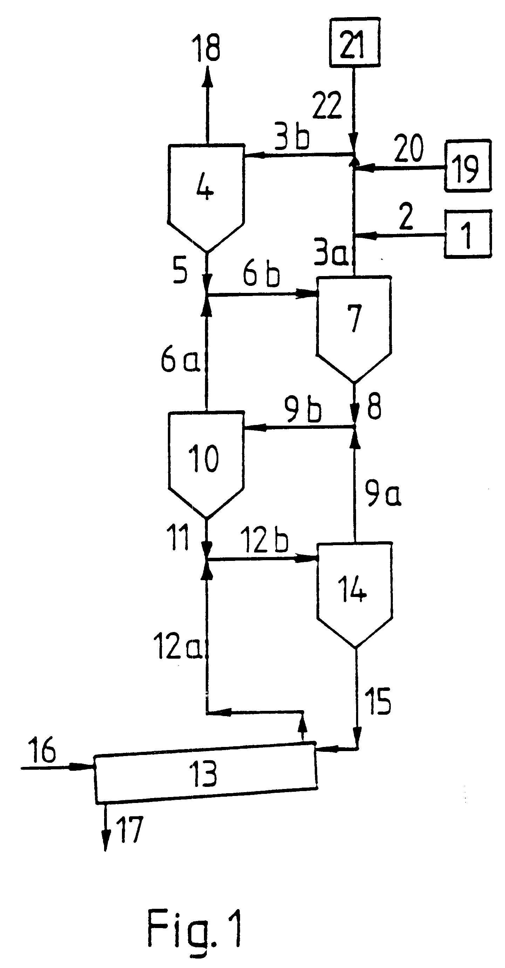

Fig. 1 zeigt das Fließbild des erfindungsgemäßen Verfahrens, das mit kristallinem Eisensulfat als Katalysator arbeitet.

Aus der Mahlanlage 1, zu der auch eine Homogenisierungs- und eine Trocknungseinrichtung gehören, wird das Zementrohmehl über die Leitung 2 in die Leitung 3a des Vorwärmers eingebracht. Das Rohmehl wird im Abgasstrom suspendiert, der in der Leitung 3a fließt, und gelangt über die Leitung 3b in den Zyklon 4, wo eine Abtrennung der Feststoffpartikel erfolgt. Die Feststoffpartikel gelangen über die Leitung 5 in die Leitung 6a, wo sie erneut im Abgasstrom suspendiert werden, der in der Leitung 6a fließt. Die Suspension gelangt dann über die Leitung 6b in den Zyklon 7, wo eine abermalige Abtrennung der Feststoffteilchen erfolgt, die über die Leitung 8 in die Leitung 9a gelangen, wo sie erneut im Abgasstrom suspendiert werden. Das Abgas aus dem Zyklon 7 gelangt in die Leitung 3a. Aus der Leitung 9a tritt die Feststoffsuspension über die Leitung 9b in den Zyklon 10 ein, wo sie in ihre Bestandteile getrennt wird. Während das Abgas über die Leitung 6a abfließt, werden die Feststoffteilchen über die Leitung 11 der Leitung 12a zugeführt, in der sie im Abgasstrom suspendiert werden, der aus dem Drehrohrofen 13 in die Leitung 12a gelangt. Die Feststoffsuspension tritt über die Leitung 12b in den Zyklon 14 ein, wo die Trennung der Feststoffsuspension erfolgt. Während das Abgas über die Leitung 9a abfließt, gelangen die im Zyklon 14 abgeschiedenen Feststoffe über die Leitung 15 in den Drehrohrofen 13, wo sie langsam der Flamme entgegenfließen, die durch den Brenner 16 erzeugt wird. Der Zementklinker wird aus dem Drehrohrofen über die Leitung 17 entnommen. Das Zementrohmehl hat in der Leitung 15 in der Regel eine Temperatur von 800 bis 900°C, während in der Leitung 12a eine Abgastemperatur von ca. 1100 bis 1200°C herrscht. Auf dem Weg durch die einzelnen Zyklone des Vorwärmers kühlt sich das Abgas ab, und die Wärmeenergie wird vom Zementrohmehl aufgenommen. Das Abgas tritt in die Leitung 3a mit einer Temperatur von ca. 500 bis 600°C ein und kühlt sich in der Leitung 3b sowie im Zyklon 4 auf eine Temperatur von 300 bis 400°C ab. Aus dem Zyklon 4 tritt das Abgas zur Feinentstaubung über die Leitung 18 in einen Elektrofilter ein, der in der Zeichnung nicht dargestellt ist.

Aus dem Vorratsbunker 19 wird Eisensulfat mit einer Teilchengröße von 50 bis 100µm über die Leitung 20 in die Leitung 3a gefördert, wobei dem Abgas pro Nm³ ca. 2 g Eisensulfat (berechnet als FeSO₄) zugegeben werden. Das Eisensulfat vermischt sich mit dem Zementrohmehl, das im Abgasstrom in einer Menge von ca. 750 g/Nm³ vorhanden ist. In die Leitung 3a wird aus dem Tank 21 über die Leitung 22 NH₃ eingebracht. Das NH₃ kann entweder gasförmig oder - soweit es die Abgastemperatur zuläßt - in Form einer Lösung zugegeben werden. Die eingesetzte NH₃-Menge ist von der im Abgas vorhandenen Stickoxidmenge abhängig, die ständig analysiert und als NO berechnet wird. Pro Mol NO wird dem Abgas ein Mol NH₃ zugesetzt. In den Leitungen 3a und 3b sowie im Zyklon 4 erfolgt die Reduktion der Stickoxide unter Bildung von H₂O und N₂, wobei der Entstickungsgrad bei Verwendung von reinem Eisensulfat immer über 90 % und bei Verwendung eines Gemisches aus Eisensulfat und Mangansulfat immer über 92 % liegt. Die Temperatur in den Leitungen 3a und 3b sowie im Zyklon 4 muß im Bereich von 300 bis 450°C liegen, wobei ein Temperaturbereich von 350 bis 420°C bevorzugt ist.

Es hat sich gezeigt, daß die Entstickungsleistung des beim erfindungsgemäßen Verfahren verwendeten Katalysators durch die Eigenschaften des Zementrohmehls nicht beeinträchtigt wird, was angesichts der im Zementrohmehl enthaltenen Bestandteile für den Fachmann sehr überraschend ist.

In einem Drehrohrofen wurden pro Stunde 60 t Zementklinker erzeugt, wobei ca. 120 000 Nm³ Abgas entstanden. Als Rohstoff wurden einem Vorwärmer 90 t Rohmehl pro Stunde zugeführt, wobei die gesamte Abgasmenge in den Vorwärmer gelangte. Der Vorwärmer bestand aus vier Zyklon-Ebenen 4, 7, 10, 14, die wiederum jeweils zwei Zyklone aufwiesen, um die Mengenströme besser beherrschen zu können. In den Leitungen 3a, 6a, 9a, 12a wurde eine Suspension von 750 g Feststoff/Nm³ Abgas erzeugt. Die Zyklone trennten die Suspensionen so, daß das Abgas noch einen Feststoffgehalt von ca. 70 g/Nm³ aufwies. Das Abgas enthielt ca. 2000 mg NO/Nm³, und dem Abgas wurden 2 g FeSO₄/Nm³ zugegeben, was pro Stunde einer Eisensulfatmenge von ca. 250 kg entsprach.

Bei einem Molverhältnis NH₃ : NO = 1 : 1 wurde eine Entstickungsleistung von mindestens 90 % erreicht; das gereinigte Abgas hatte am Ausgang der Zyklon-Ebene 4 einen NO-Gehalt < 200 mg/Nm³.

## Patentansprüche

1. Verfahren zur Entstickung der bei der Herstellung von Zement anfallenden Abgase, bei dem die mit Rohmehl beladenen Abgase bei 300 bis 450 °C mit NH₃ in Gegenwart eines Katalysators zur Reaktion gebracht werden, wobei das NH₃ dem Abgas in einem Molverhältnis NH₃ : NO = 0,7 : 1 bis 1,5 : 1 zugegeben wird, dadurch gekennzeichnet, daß als Katalysator kristallines Eisensulfat oder eine Mischung aus kristallinem Eisensulfat und kristallinem Mangansulfat verwendet wird, wobei der Katalysator eine Teilchengröße von 50 bis 500 µm hat und im Abgasstrom vor dem obersten Zyklon des Vorwärmers verteilt wird.

2. Verfahren nach Anspruch 1, dadurch gekennzeichnet, daß der Katalysator in einer Menge von 1 bis 3 g/Nm³ zugegeben und im Zementklinker eingebunden wird.

3. Verfahren nach den Ansprüchen 1 bis 2, dadurch gekennzeichnet, daß Eisensulfat und Mangansulfat (berechnet als FeSO₄ und MnSO₄) im Gewichtsverhältnis 3 : 1 bis 5 : 1 gemischt sind.

4. Verfahren nach den Ansprüchen 1 bis 3, dadurch gekennzeichnet, daß dem Katalysator vor seiner Verteilung im Abgasstrom Ca(OH)₂ und/oder CaO zugemischt wird, wobei das Molverhältnis von freiem SO₂ zu dem als Ca(OH)₂ und/oder CaO zugemischtem Ca 1 : 1,5 bis 1 : 5 beträgt.

## Claims

1. A method for removing nitrogen oxides from the exhaust gases produced upon the production of cement, in which the exhaust gases laden with raw meal are caused to react at 300 to 450°C with NH₃ in the presence of a catalyst, the NH₃ being added to the exhaust gas in a molar ratio of NH₃ : NO = 0.7 : 1 to 1.5 : 1, characterised in that crystalline iron sulphate or a mixture of crystalline iron sulphate and crystalline manganese sulphate is used as the catalyst, the catalyst having a particle size of 50 to 500 µm and being distributed in the stream of exhaust gas before the uppermost cyclone of the preheater.

2. A method according to Claim 1, characterised in that the catalyst is added in a quantity of 1 to 3 g/Nm³ and is integrated in the cement clinker.

3. A method according to Claims 1 to 2, characterised in that iron sulphate and manganese sulphate (calculated as FeSO₄ and MnSO₄) are mixed in a weight ratio of 3 : 1 to 5 : 1.

4. A method according to Claims 1 to 3, characterised in that Ca(OH)₂ and/or CaO are admixed to the catalyst before the distribution thereof in the stream of exhaust gas, the molar ratio of free SO₂ to the Ca admired as Ca(OH)₂ and/or CaO is 1 : 1.5 to 1 : 5.

## Revendications

1. Procédé d'élimination d'oxydes d'azote des gaz d'échappement provenant de la fabrication de ciment, dans lequel les gaz d'échappement chargés de farine crue sont mis à réagir à 300 à 450 °C avec du NH₃ en présence d'un catalyseur, le NH₃ étant ajouté au gaz d'échappement dans un rapport molaire de NH₃ : NO = 0,7 : 1 à 1,5 : 1, caractérisé en ce qu'on utilise en tant que catalyseur du sulfate de fer cristallin ou un mélange de sulfate de fer cristallin et de sulfate de manganèse cristallin, le catalyseur présentant une granulométrie de 50 à 500 µm et étant distribué dans le flux de gaz d'échappement avant le cyclone supérieur du préchauffeur.

2. Procédé selon la revendication 1, caractérisé en ce que le catalyseur est ajouté par quantités de 1 à 3 g/Nm³ et qu'il est intégré dans le clinker.

3. Procédé selon les revendications 1 à 2, caractérisé en ce que le sulfate de fer et le sulfate de manganèse (calculés sous forme de FeSO₄ et de MnSO₄) sont mélangés avec un rapport massique de 3 : 1 à 5 : 1.

4. Procédé selon les revendications 1 à 3, caractérisé en ce qu'on mélange du Ca(OH)₂ et/ou du CaO au catalyseur avant sa distribution dans le flux de gaz d'échappement, le rapport molaire de SO₂ libre au Ca ajouté sous forme de Ca(OH)₂ et/ou de CaO vaut 1 : 1,5 à 1 : 5.
